Europäisches Patentamt

(19) European Patent Office

Office européen des brevets

(11) EP 0 831 169 A2

## (12) EUROPEAN PATENT APPLICATION

(43) Date of publication:
25.03.1998 Bulletin 1998/13

(51) Int. Cl.⁶: $D21C\ 9/10$, $D21C\ 9/16$, $C08F\ 220/60$

(21) Application number: 97116469.4

(22) Date of filing: 22.09.1997

(84) Designated Contracting States:
AT BE CH DE DK ES FI FR GB GR IE IT LI LU MC NL PT SE

(30) Priority: 23.09.1996 US 719507

(71) Applicant:
NALCO CHEMICAL COMPANY
Naperville Illinois 60563-1198 (US)

(72) Inventors:
• Nunn, Maureen B.
Naperville, Illinois 60565 (US)

• Ramesh, Manian
Lisle, Illinois 60532 (US)
• Wetegrove, Robert L.
Winfield, Illinois 60190 (US)

(74) Representative:
Wibbelmann, Jobst, Dr., Dipl.-Chem.
Wuesthoff & Wuesthoff,
Patent- und Rechtsanwälte,
Schweigerstrasse 2
81541 München (DE)

(54) **Stabilizers for use in oxygen-based treatments of cellulose materials**

(57)     The invention is a method for ameliorating oxygen-based treatments of cellulosic materials in aqueous systems comprising adding to an aqueous system containing an effective stabilizing amount of a compound or a combination of compounds which may include a polymer. The invention is also three novel grafted polymers.

EP 0 831 169 A2

## Description

### Field of the Invention

The invention is a method for ameliorating oxygen-based treatments of cellulosic materials in aqueous systems comprising adding to an aqueous system containing cellulosic materials an effective stabilizing amount of a compound or a combination of compounds which may include a polymer. The invention is also three novel grafted polymers.

### Background of the Invention

Paper is made from chemically produced wood pulp, which is also referred to as cellulosic pulp. In the production of paper, during the chemical pulping process, cellulosic pulp undergoes chemical delignification and bleaching. Delignification and bleaching is part of the chemical pulping process in which the ligneous and colored materials are removed from the chemical cellulosic pulp.

The delignification and bleaching of the pulp is accomplished in several bleaching stages. This is referred to as a multi-stage bleaching and delignification process. A bleaching stage for the purposes of this invention means a bleaching phase starting with the addition of a bleaching chemical to the pulp and ending with the washing of the pulp. Within each bleaching stage, there are many process variables such as the amount of chemical added, time, temperature and pH. The sequence of bleaching stages used in the bleaching and delignification process will change, as will the variables within each stage. The selection of stages and variables, and the sequence of stages, is determined by several factors including:

a. the nature of the cellulosic pulp, softwood versus hardwood;

b. the pH of the pulping process used; and

c. the final use for which the bleached pulp is designated.

In an effort to achieve a suitable balance between the competing factors of pulp brightness and pulp strength (which is often measured as a function of pulp viscosity), bleach plants have resorted to multi-stage processes.

In the multi-stage bleaching process, the cellulosic materials, such as wood pulp, is first digested and cooked. A first step after cooking and digestion is often brown stock washing. In brown stock washing, the pulp having pH of 11 - 13 is repeatedly washed with water to remove some colored lignins.

The first bleaching stage is often designed to remove more lignins and other encrustants. One delignification and bleaching stage is oxygen delignification. In oxygen delignification, oxygen-gas is mixed with the pulp. The pulp is made alkali to facilitate the reaction. The pH of the pulp is generally about 10 - 11. In oxygen delignification, two reactions occur. In one reaction, the oxygen gas reacts with the pulp to make the lignins soluble in water at alkali pHs. In another, less desirable reaction, the oxygen gas reacts with the pulp to degrade the pulp. This reduces pulp strength.

In another stage, the pulp aqueous suspension is chlorinated. The pulp is made slightly acidic (pH 2 - 4) to facilitate the reaction. Chlorination of the unbleached pulp makes the ligneous impurities partly soluble in water. These lignins are removed by a slightly acid water wash. After chlorination, the portions of the lignins not readily soluble in water are removed by an alkaline solution, such as dilute sodium hydroxide, about pH 8 - 13.

Following a treatment with sodium hydroxide and subsequent washes of the pulp, the alkaline extract pulp may be further chlorinated with chemicals such as calcium or sodium hypochlorite. During this stage, the pH is maintained at between 10 - 11. After washing, the pulp may then be further chlorinated in another stage with aqueous chlorine dioxide, and washed again.

In some bleach plants, the final bleaching stage is a hydrogen peroxide bleaching stage. The main purpose of this stage is to stabilize the final bleaching brightness and perhaps to raise the brightness. The pH of the hydrogen peroxide bleaching stage is maintained at from 9 - 12.

Bleaching often adversely affects pulp strength. For example, the chlorination stage converts most of the colored lignin which remains after the initial pulping or digestive process to chlorinated lignin derivatives which are partially soluble in acidic chlorine solution and particularly soluble in alkaline extraction liquors. Such stages are also referred to as a delignification stage. Nevertheless, destructive oxidation also occurs which reduces the length of the cellulosic molecule; and, accordingly, reduces the strength and the viscosity of the pulp. The competition between brightness and pulp strength (often measured as pulp viscosity) has been of particular concern in the paper industry and has been primarily responsible for the proliferation of the various bleaching sequences. Brightness can be increased by increasing either the number of bleaching steps used or by increasing the amount of bleaching chemical used. Among treatments for increasing brightness include thiourea dioxide as disclosed in U.S. Patent No. 4,244,780 and poly(acrylic acid) as disclosed in U.S. Patent No. 4,255,233. However, this results in a decrease of pulp strength and an increase in the cost of chemicals used. Furthermore, as will be discussed below, increasing the number of chlorination stages presents the paper manufacturer with a potential environmental hazard.

Regardless of the sequence used, the bulk of cellulose bleaching still is performed using some combination of chlorination and alkaline extraction. However, chlorination is not an environmentally friendly process. Chlorination produces dioxin which is considered by many local and national agencies to be a toxic substance which is hazardous to the environment. In fact, extremely strict controls have been placed on the discharge of dioxin into the environment. Accordingly, many paper producers are looking to chlorine-free bleaching processes.

To further complicate the delignification and bleaching process, metal contamination, such as iron, manganese and copper interfere with several of bleaching stages, such as, peroxide bleaching, chlorine bleaching, chlorine dioxide bleaching, and oxygen delignification. For example, in oxygen delignification and peroxide bleaching, not only does the iron form color bodies under alkaline conditions, but the iron catalyses the decomposition of the cellulose.

Currently, a number of chemicals are being used to remove these metals from the cellulosic pulp. Particularly, chelating amines have been used to improve pulp brightness through the removal of metallic impurities. United States Patent No. 4,298,428 discloses several chelating amines for accomplishing this. Other chelating compounds used in the industry include nitrilotriacetic acid (NTA), ethylenediaminetetraacetic acid (EDTA), and diethylenetriaminepentaacetic acid (DTPA). These chemicals, often referred to as chelants, are added immediately before the bleaching stage, but after the aqueous pulp slurry has been acidified. The pulp must be acidified since the chelating chemicals presently used in the industry, such as EDTA, NTA and DTPA, will not remove metal impurities at alkaline pHs, particularly above pH 8. NTA is considered by some authorities to be hazardous and its discharge into the environment is closely controlled.

Since these chelating chemicals do not function above a pH of about 8, several problems are created for the industry. The first problem is that an additional acidification step is always necessary when these chelating chemicals are added after an alkaline extraction, but before the next bleaching stage. This additional acidifying step is costly to the paper producer. Moreover, the acidifying chemicals are potentially hazardous to paper mill workers.

A second problem caused by these chelating chemicals is that they prevent the paper-making industry from switching to a chlorine-free bleaching process. In more detail, chlorination is acidic and these prior art chelating chemicals are only effective in an acidic medium. In contrast, the chlorine-free bleaching stages, such as oxygen delignification, and hydrogen peroxide bleaching, are alkaline. Since currently available chelating chemicals do not work well in alkaline environments, additional acidifying steps must be added to the process. Even with the addition acidifying steps, these prior art chelant chemicals do not work throughout the entirety of the process since the non-chlorine processes are conducted under alkaline conditions. Accordingly, new treatments are necessary for removing metals from chemically produced pulp.

In light of the disadvantages of the prior art, it would advantageous to provide an agent which would increase brightness by removing the metallic impurities in the pulp at an alkaline pH, above 7. It would be further advantageous to provide a treatment which would increase brightness and also increase pulp strength, as measured by viscosity. It would be a still further advantage to provide a treatment which would eliminate the need for chlorine bleaching stages.

## Summary of the Invention

The invention is a method for ameliorating oxygen-based treatments of cellulosic materials in aqueous systems comprising adding to an aqueous system containing cellulosic materials an effective stabilizing amount of a compound or a combination of compounds which may include a polymer. The invention is also three novel grafted polymers.

## Description of the Invention

The invention is a method for ameliorating oxygen-based treatments of cellulosic materials in aqueous systems comprising adding to an aqueous system containing cellulosic materials an effective oxygen-based treatment stabilizing amount of a compound selected from the group consisting of tris(hydroxymethyl)aminomethane, N-alkyl dimethyl benzyl ammonium chloride, N-dialkyl methyl benzyl ammonium chloride and combinations thereof.

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. From about 0.0001 to about 2.0 percent by weight of compound may be added based on the dry weight of the cellulosic material. Preferably, from about 0.01 to about 1.0 percent by weight of compound may be added based on the dry weight of the cellulosic material. Most preferably, from about 0.1 to about 0.8 percent by weight of compound may be added based on the dry weight of the cellulosic material.

The invention is also a method for ameliorating oxygen-based treatments of cellulosic materials in aqueous systems comprising adding to an aqueous system containing cellulosic materials an effective oxygen-based treatment stabilizing amount of a combination of:

a) diethylenetriaminepentaacetic acid and

b) a second compound selected from the group consisting of citric acid, sodium gluconate, sodium glucoheptonate, ethylenediaminetetraacetic acid, tris (hydroxymethyl)aminomethane, and a combination of N-alkyl dimethyl benzyl ammonium chloride and N-dialkyl methyl benzyl ammonium chloride.

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. The mole ratio of diethylenetriaminepentaacetic acid to the second compound may be from 0.001: 99.999 to 99.999:0.001. Preferably, the ratio may be 0.1 to 99.9 to 99.9 to 0.1. Most preferably, the ratio may be 1.0 to 99 to 99 to 1.0.

The invention is also a method for ameliorating oxygen-based treatments of cellulosic materials in aqueous systems comprising adding to an aqueous system containing cellulosic materials an effective oxygen-based treatment stabilizing amount of a combination of:

a) citric acid and

b) a second compound selected from the group consisting of sodium gluconate, sodium glucoheptonate, ethylenediaminetetraacetic acid, tris(hydroxymethyl)aminomethane, and a combination of N-alkyl dimethyl benzyl ammonium chloride and N-dialkyl methyl benzyl ammonium chloride.

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. The mole ratio of citric acid to the second compound may be from 0.001:99.999 to 99.999:0.001. Preferably, the ratio may be 0.1 to 99.9 to 99.9 to 0.1. Most preferably, the ratio may be 1.0 to 99 to 99 to 1.0.

The invention is also a method for ameliorating oxygen-based treatments of cellulosic materials in aqueous systems comprising adding to an aqueous system containing cellulosic materials an effective oxygen-based treatment stabilizing amount of a combination of:

a) sodium gluconate and

b) a second compound selected from the group consisting of sodium glucoheptonate, ethylenediaminetetraacetic acid, tris(hydroxymethyl)aminomethane, and a combination of N-alkyl dimethyl benzyl ammonium chloride and N-dialkyl methyl benzyl ammonium chloride.

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. The mole ratio of sodium gluconate to the second compound may be from 0.001: 99.999 to 99.999: 0.001. Preferably, the ratio may be 0.1 to 99.9 to 99.9 to 0.1. Most preferably, the ratio may be 1.0 to 99 to 99 to 1.0.

The invention is also a method for ameliorating oxygen-based treatments of cellulosic materials in aqueous systems comprising adding to an aqueous system containing cellulosic materials an effective oxygen-based treatment stabilizing amount of a combination of:

a) ethylenediaminetetraacetic acid, and

b) tris(hydroxymethyl)aminomethane, and a combination of N-alkyl dimethyl benzyl ammonium chloride and N-dialkyl methyl ammonium chloride.

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. The mole ratio of ethylene diamine tetraacetic acid to the second compound may be from 0.001: 99.999 to 99.999:0.001. Preferably, the ratio may be 0.1 to 99.9 to 99.9 to 0.1. Most preferably, the ratio may be 1.0 to 99 to 99 to 1.0.

The invention is also a method for stabilizing peroxide treatments in aqueous paper production streams containing kraft pulp, peroxide, manganese and iron comprising the step of adding to the aqueous paper production stream containing kraft pulp, peroxide, manganese and iron, wherein an equal or greater amount of iron is present than manganese, an effective peroxide-stabilizing amount of a combination selected from the group consisting of: poly(acrylamide/sodium acrylate/N-(trishydroxymethyl)methyl acrylamide)/diethylenetriaminepentaacetic acid, poly(acrylamide/sodium acrylate/N-(trishydroxymethyl)methyl acrylamide)/citric acid, poly(acrylamide/sodium acrylate/N-(trishydroxymethyl)methyl acrylamide)/a combination of N-alkyl dimethyl benzyl ammonium chloride and N-dialkyl methyl benzyl ammonium chloride, poly(acrylamide/sodium acrylate/N-(trishydroxymethyl)methyl acrylamide)/ethylenediaminetetraacetic acid, diethylenetriaminepentaacetic acid/a combination of N-alkyl dimethyl benzyl ammonium chloride and N-dialkyl methyl benzyl ammonium chloride, diethylenetriaminepentaacetic acid/ethylenediaminetetraacetic acid, citric acid/a combination of N-alkyl dimethyl benzyl ammonium chloride and N-dialkyl methyl benzyl ammonium chloride, citric acid/sodium glucoheptonate, citric acid/ethylenediaminetetraacetic acid, sodium gluconate/sodium glucoheptonate, sodium gluconate/ethylenediaminetetraacetic acid and a combination of N-alkyl dimethyl benzyl ammonium chloride and N-dialkyl methyl benzyl ammonium chloride/sodium glucoheptonate.

The invention is also a method for stabilizing peroxide treatments in aqueous paper production streams containing peroxide, kraft pulp, manganese and iron comprising the step of adding to the aqueous paper production stream containing peroxide, kraft pulp, manganese and iron, wherein an equal amount or lower of iron is present than manganese, an effective peroxide-stabilizing amount of a combination selected from the group consisting of: poly(acrylamide/sodium acrylate/N-(trishydroxymethyl)methyl acrylamide)/diethylenetriaminepentaacetic acid, poly(acrylamide/sodium acrylate/N-(trishydroxymethyl)methyl acrylamide)/a combination of N-alkyl dimethyl benzyl ammonium chloride and N-dialkyl methyl benzyl ammonium chloride, poly(aspartic acid)/citric acid, poly(aspartic acid)/sodium glucoheptonate, poly(aspartic acid)/ethylenediaminetetraacetic acid, diethylenetriaminepentaacetic acid/citric acid and diethylenetriaminepentaacetic acid /sodium gluconate.

The invention is also a method for stabilizing peroxide treatments in aqueous paper production streams containing peroxide, mechanical pulp, manganese and iron, comprising the step of adding to the aqueous paper production streams containing peroxide, mechanical pulp, manganese and iron, wherein an equal or greater amount of iron is present than manganese, an effective peroxide-stabilizing amount of a combination selected from the group consisting of: poly(acrylamide/sodium acrylate/N-(trishydroxymethyl)methyl acrylamide)/sodium gluconate, poly(acrylamide/sodium acrylate/N-(trishydroxymethyl)methyl acrylamide)/sodium glucoheptonate, diethylenetriaminepentaacetic acid/sodium gluconate, diethylenetriaminepentaacetic acid/a combination of N-alkyl dimethyl benzyl ammonium chloride and N-dialkyl methyl benzyl ammonium chloride, diethylenetriaminepentaacetic acid/sodium glucoheptonate, citric acid/a combination of N-alkyl dimethyl benzyl ammonium chloride and N-dialkyl methyl benzyl ammonium chloride, citric acid/sodium glucoheptonate, sodium gluconate/sodium glucoheptonate, sodium gluconate/ethylenediaminetetraacetic acid and a combination of N-alkyl dimethyl benzyl ammonium chloride and N-dialkyl methyl benzyl ammonium chloride/ethylenediaminetetraacetic acid.

The invention is also a method for stabilizing peroxide treatments in aqueous paper production streams containing peroxide, mechanical pulp, manganese and iron, comprising the step of adding to the aqueous paper production stream containing peroxide, mechanical pulp, manganese and iron, wherein an equal or lower amount of iron is present than manganese, an effective peroxide-stabilizing amount of a combination selected from the group consisting of: poly(acrylamide/sodium acrylate/N-(trishydroxymethyl)methyl acrylamide)/sodium gluconate, poly(acrylamide/sodium acrylate/N-(trishydroxymethyl)methyl acrylamide)/a combination of N-alkyl dimethyl benzyl ammonium chloride and N-dialkyl methyl benzyl ammonium chloride, poly(acrylamide/sodium acrylate/N-(trishydroxymethyl)methyl acrylamide)/ethylenediaminetetraacetic acid, poly(aspartic acid)/ethylenediaminetetraacetic acid, diethylenetriaminepentaacetic acid /citric acid, diethylenetriaminepentaacetic acid/sodium gluconate, diethylenetriaminepentaacetic acid/a combination of N-alkyl dimethyl benzyl ammonium chloride and N-dialkyl methyl benzyl ammonium chloride, diethylenetriaminepentaacetic acid/sodium glucoheptonate, citric acid/ethylenediaminetetraacetic acid and sodium gluconate/a combination of N-alkyl dimethyl benzyl ammonium chloride and N-dialkyl methyl benzyl ammonium chloride.

The invention is also a method for ameliorating oxygen-based treatments of cellulosic materials in aqueous systems comprising adding to an aqueous system containing cellulosic materials an effective oxygen-based treatment stabilizing amount of a water-soluble polymer selected from the group consisting of poly(aspartic acid), poly(dithiocarbamate), poly(acrylamide/sodium acrylate/N-(trishydroxymethyl)methyl acrylamide), poly(acrylamide/sodium acrylate/sodium acrylamido(3,4-dihydroxyphenyl) methane sulfonate), poly(sodium acrylate/sodium acrylamido(2-hydroxyphenyl) methane sulfonate), poly(sodium acrylate/N-(trishydroxymethyl)methyl acrylamide), poly(sodium acrylate/sodium acrylamido(3,4-dihydroxyphenyl) methane sulfonate) and poly(acrylamide/sodium acrylate/sodium acrylamido(2-hydroxyphenyl) methane sulfonate).

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. From about 0.001 to about 2 percent by weight of water-soluble polymer may be added based on the dry weight of the cellulosic material. The aqueous system may be a pulp and paper system.

The water-soluble polymer may be poly(acrylamide/sodium acrylate/N-(trishydroxymethyl)methyl acrylamide), and the mole ratio of acrylamide to sodium acrylate to N-(trishydroxymethyl)methyl acrylamide may be from 0:1:99 to 10:60:30 and the molecular weight may be from 1,000 to 10,000,000. The water-soluble polymer may be poly(acrylamide/ sodium acrylate/sodium acrylamido(3,4-dihydroxyphenyl) methane sulfonate) and the mole ratio of acrylamide to sodium acrylate to sodium acrylamido(3,4-dihydroxyphenyl) methane sulfonate may be from 0:10:90 to 10:60:30 and the molecular weight may be from 1,000 to 10,000,000. The water-soluble polymer may be poly(acrylamide/sodium acrylate/sodium acrylamido(2-hydroxyphenyl) methane sulfonate and the mole ratio of acrylamide to sodium acrylate to sodium acrylamido(2-hydroxyphenyl) methane sulfonate may be from 0:10:90 to 10:60:30 and the molecular weight may be from 1,000 to 10,000,000.

The invention is also a method for ameliorating oxygen-based treatments of cellulosic materials in aqueous systems comprising adding to an aqueous system containing cellulosic materials an effective oxygen-based treatment stabilizing amount of:

a) a compound selected from the group consisting of diethylenetriaminepentaacetic acid, citric acid, sodium gluconate, sodium glucoheptonate, ethylenediaminetetraacetic acid, tris(hydroxymethyl)aminomethane, a combination of N-alkyl dimethyl benzyl ammonium chloride and N-dialkyl methyl benzyl ammonium chloride and
b) a water-soluble polymer selected from the group consisting of poly(aspartic acid), poly(dithiocarbamate), poly(acrylamide/sodium acrylate/N-(trishydroxymethyl)methyl acrylamide), poly(acrylamide/sodium acrylate/sodium acrylamido(3,4-dihydroxyphenyl) methane sulfonate), poly(sodium acrylate/sodium acrylamido(2-hydroxyphenyl) methane sulfonate), poly(sodium acrylate/sodium acrylamido(3,4-dihydroxyphenyl) methane sulfonate), poly(sodium acrylate/N-(trishydroxymethyl)methyl acrylamide) and poly(acrylamide/sodium acrylate/sodium acrylamido(2-hydroxyphenyl) methane sulfonate).

The oxygen-based treatment may be selected from the group consisting of oxygen delignification, oxygen-aided extraction, peroxide-aided extraction, peroxide/oxygen-aided extraction, peroxide bleaching and pressurized peroxide bleaching. The aqueous system may be a pulp and paper system. The mole ratio of the compound to the water-soluble polymer may be from about 0.00001: 99.99999 to about 99.99999: 0.00001. Preferably, the ratio may be 0.1 to 99.9 to 99.9 to 0.1. Most preferably, the ratio may be 1.0 to 99 to 99 to 1.0. The water-soluble polymer may be poly(acrylamide/sodium acrylate/N-(trishydroxymethyl)methyl acrylamide) and the mole ratio of acrylamide to sodium acrylate to N-(trishydroxymethyl)methyl acrylamide may be from 0:1:99 to 10:60:30 and the molecular weight may be from 1,000 to 10,000,000. The water-soluble polymer may be poly(acrylamide/sodium acrylate/sodium acrylamido(3,4-dihydroxyphenyl) methane sulfonate) and the mole ratio of acrylamide to sodium acrylate to sodium acrylamido(3,4-dihydroxyphenyl) methane sulfonate may be from 0:1:99 to 10:30:60 and the molecular weight may be from 1,000 to 10,000,000. The water-soluble polymer may be poly(acrylamide/sodium acrylate/sodium acrylamido(2-hydroxyphenyl) methane sulfonate) and the mole ratio of acrylamide to sodium acrylate to sodium acrylamido(2-hydroxyphenyl) methane sulfonate may be from 0:1:99 to 10:30:60 and the molecular weight may be from 1,000 to 10,000,000.

The invention is also a water-soluble polymer of the formula poly(acrylamide/sodium acrylate/sodium acrylamido(3,4-dihydroxyphenyl) methane sulfonate). Preferably, the polymer may have a mole ratio of acrylamide to sodium acrylate to sodium acrylamido(3,4-dihydroxyphenyl) methane sulfonate of from 0:1:99 to 10:30:60 and the molecular weight may be from 1,000 to 10,000,000.

The invention is also a water-soluble polymer of the formula poly(acrylamide/sodium acrylate/sodium acrylamidomethyl(2-hydroxyphenyl) sulfonate). Preferably, the polymer may have a mole ratio of acrylamide to sodium acrylate to sodium acrylamido(2-hydroxyphenyl) methane sulfonate of from 0:1:99 to 10:30:60 and the molecular weight may be from 1,000 to 10,000,000.

The invention is also a water-soluble polymer of the formula poly(sodium acrylate/sodium acrylamido(2-hydroxyphenyl) methane sulfonate). Preferably, the polymer may have a mole ratio of sodium acrylate to sodium acrylamido(2-hydroxyphenyl) methane sulfonate of from 99:1 to 60:40 and the molecular weight may be from 1,000 to 10,000,000.

The invention is also a water-soluble polymer of the formula poly(sodium acrylate/N-(trishydroxymethyl)methyl acrylamide). Preferably, the polymer may have a mole ratio of sodium acrylate to N-(trishydroxymethyl)methyl acrylamide of from 99:1 to 60:40 and the molecular weight may be from 1,000 to 10,000,000.

The invention is also a water-soluble polymer of the formula poly(sodium acrylate/acrylamido(3,4-dihydroxyphenyl) methane sulfonate). Preferably, the polymer may have a mole ratio of sodium acrylate to acrylamido(3,4-dihydroxyphenyl) methane sulfonate of from 99:1 to 60:40 and the molecular weight may be from 1,000 to 10,000,000.

The invention is also a method for ameliorating oxygen-based treatments of cellulosic materials in aqueous systems comprising adding to an aqueous system containing cellulosic materials an effective oxygen-based treatment stabilizing amount of a combination of sodium glucoheptonate and xylanase enzyme. The oxygen-based treatment may be selected from the group consisting of oxygen delignification, oxygen-aided extraction, peroxide-aided extraction, peroxide/oxygen-aided extraction, peroxide bleaching and pressurized peroxide bleaching.

The compounds of this invention may be added to pulp and paper systems at various points, including but not limited to at the brown stock washers, the oxygen delignification stage, the chlorine stage, the chlorine dioxide stage, the Q-step, the extraction stage, the oxygen-aided extraction stage, the peroxide-aided extraction stage, the oxygen/peroxide-aided extraction stage, the peroxide stage, after the peroxide stage to prevent reversion on the way to the paper machine, in the refiners of the pulp mill and the paper mill, in the showers to prevent plugging, and at the sodium dithionite bleaching stage.

## The High Molecular Weight Water Soluble Flocculants

The polymeric flocculants employed in the process of the present invention can be prepared by a variety of methods. The polymers of the subject invention can be conveniently prepared by amidation or transamidation reactions on an existing polymer, by polymerization of a trishydroxymethyl containing monomer, or by reaction with bisulfite, aldehyde and AcAm/NaAc polymers. It is presently preferred to prepare the polymers of the instant invention from water soluble copolymers of acrylamide and acrylic acid or its water soluble alkali metal or ammonium salts by transamidation of the amide functionality on the acrylamide mer units of the polymer. The polymers useful as starting materials will generally contain from as little as 1 mole percent acrylamide to as high as 50 mole percent acrylamide. Preferably, the polymer will contain from 5-40 mole percent acrylamide, and most preferably, from 10-30 mole percent acrylamide. While a copolymer of acrylamide, acrylic acid and its water soluble alkali metal or ammonium salts is preferred, copolymers of methacrylamide and acrylic acid, or its alkali metal salts may also be utilized. While in a presently preferred embodiment of the invention a copolymer of acrylamide and acrylic acid is used as a starting material, other anionic or nonionic monomers can be incorporated into the starting polymer chain. Monomers of this type include but are not limited to acrylamidopropane sulfonic acid, vinylformamide, vinyl acetate, and vinyl sulfonate. Polymers which have been derivitized in accordance with U.S. Patent 4,680,339 to include sulfonate groups may also be employed so long as sufficient unreacted amide functionality remains for the transamidation reaction which produces the desired functionality. Likewise, the polymer may be modified to include hydroxamic acid groups as taught in U.S. 4,767,540 to Spitzer et al.

Vinyl addition polymers comprised of anionic acrylate mer units and/or N-sulfoalkyl (meth)acrylamide mer units, optionally together with (meth)acrylamide mer units, may be directly synthesized from the corresponding monomers by known techniques, for instance using as the sulfonate-containing monomer the 2-acrylamido-2-methylpropane sulfonic acid, or the methacrylamide version thereof. N-sulfoalkyl (meth)acrylamide mer units can also be incorporated into an existing polymer by post-polymerization derivatization, for instance by one of the methods described in U. S. Patent No. 4,762,894 (Fong et al.) issued Aug. 9, 1988, U. S. Patent No. 4,680,339 (Fong) issued July 14, 1987, U. S. Patent No. 4,795,789 (Fong et al.) issued Jan. 3, 1989, and U. S. Patent No. 4,604,431 (Fong et al.) issued Aug. 5, 1986, the disclosures of all of which are hereby incorporated hereinto. The sulfonated mer units of such post-polymerization derivatized polymers are generally of the sulfonate N-alkyl substituted (meth)acrylamide type.

U. S. Patent No. 5,395,897 (Hurlock et al.) issued March 7, 1995 discloses a method to post derivatized poly(acrylic acids) which can also can be used to prepare polymeric systems of this invention described herein.

U. S. Patent No. 4,678,840 (Fong et al.) issued July 7, 1987, describes a method for preparation of acrylamide polymers having ionizable phosphonate groups, and the disclosures of this patent are incorporated herein by reference. Phosphonate-containing acrylamide polymers that meet the preferred molecular weight ranges may possibly be as active in the present process as other anionic acrylamide polymers described above.

Non-interfering mer units other than (meth)acrylamide may be used, such as methylol acrylamide or other nonionic but polar mer units, and even nonpolar mer units may be used to the extent that the presence of such mer units does not interfere with the water solubility of the polymeric flocculant. The polymeric flocculant generally should have a weight average molecular weight of at least about 500,000, and preferably at least about 1,000,000, and even more preferably at least about 4,000,000, or 5,000,000. The polymeric flocculant has no standard molecular weight ceiling for the purposes of the present invention, and some flocculants having molecular weights of 15,000,000 or higher may be highly useful for the present invention so long as the polymer remains water soluble or substantially water dispersible. A particularly preferred high molecular weight water soluble anionically charged flocculant for use in this invention is polyacrylic acid in either its sodium or ammonium salt forms having a molecular weight greater than about 10,000,000.

The polymeric flocculant employed in the present invention should be water soluble. The water solubility characteristic preferably is defined in terms of fluidity of aqueous solutions of the polymer. By "water soluble" is meant herein, and generally, that an aqueous solution of the polymer, at the polymer actives concentration at which it is charged to the primary settler feed is reasonably fluid, and preferably has a viscosity of no more than about 5,000 to 20,000 cps Brookfield, at ambient room temperature (from about 23° to about 26°C.). Such water solubility characteristic generally does not create a molecular weight ceiling because even an acrylamide homopolymer, substantially free of any electrolytic groups, meets such a standard at the high molecular weights that can now be provided by conventional synthesis techniques, provided the polymer is substantially linear. Hence the highly anionic polymeric flocculants employed in the present invention will generally be even more water soluble at a given molecular weight.

High molecular weight polymeric flocculants of the type described above are commonly synthesized and commercially supplied in the form of water-in-oil emulsion form. Water-in-oil emulsions of the high molecular weight anionically charged polymers useful in this invention are available commercially from a variety of sources. The water-in-oil emulsion form for these types of polymers is preferred because it permits the polymer to be prepared and shipped at reasonably high concentrations (and the polymer therein is readily dispersible in water upon inversion of such emulsion by known techniques, which is desirable for many use applications). Water-in-oil emulsions of vinyl addition polymers are well known and are described, for instance, in U. S. Patent No. 3,284,393, Vanderhoff, and U. S. Patent No. Re. 28,474, Anderson-Frisque, and the disclosures of these patents are incorporated herein by reference. The use of high molecular weight water soluble polymeric flocculants supplied in dry powder form is of course not excluded, and the preparation of a solution from dry powder eliminates the presence of the oil constituent present in the latex form.

The synthesis of multifunctionally hydroxylated poly(acrylamides) has been disclosed in *Macromolecules,* 1996, 29, 313-319. Terpolymers of acrylic acid/acrylamide/N-hydroxyalkylacrylamide have been disclosed in U.S. Patent No. 4,610,305.

The following examples are presented to describe preferred embodiments and utilities of the invention and are not meant to limit the invention unless otherwise stated in the claims appended hereto.

**Example 1**

A partially neutralized poly(acrylic acid) backbone may be prepared in various levels of neutralization by using appropriate amounts of caustic. Specifically, a backbone wherein the neutralization of acrylic acid is about 50% was prepared as follows using reactants in the following amounts:

| Reactant | Amount (g) |
|---|---|
| Escaid 110 | 304.000 |
| Span 80 | 30.000 |
| Mackamid NOA | 15.000 |
| Hypermer B246 | 3.000 |
| Acrylic Acid | 229.940 |
| Deionized Water | 277.690 |
| Versene | 0.100 |
| Sodium Formate | 0.030 |
| Sodium Hydroxide (50%) | 127.660 |
| Vazo 64 | 0.580 |

To prepare the polymer, a 1.5 liter polymerization reactor was equipped with a mechanical stirrer, an addition funnel, a nitrogen inlet, a thermocouple, and a condenser fitted with a nitrogen outlet. Escaid 110 (available from Exxon in New Jersey), Hypermer (available from ICI Americas in Wilmington, Delaware), and Mackamid NOA (available from McIntyre Group Ltd, in University Park, Illinois) and Span 80 (available from ICI Americas in Wilmington, Delaware) were weighted out in a beaker and warmed to 45°C. After 10 - 15 minutes a clear solution was obtained, and it was transferred into the polymerization reactor. Acrylic acid and deionized water were taken in a beaker and cooled to 5°C.

To the cooled and stirred solution of monomers, caustic was added dropwise, while the temperature was maintained below 25°C. Neutralization of acrylic acid was continued until the pH was about 3.5 - 4.0. Next, the monomer solution was transferred into the reactor and stirred at 1200 rpm for 30 minutes and the reactor was heated to 33-36°C. After 30 minutes stirring, the reactor was heated to 43-44°C. Versene (available from Dow Chemicals in Midland, Michigan) and Vazo 64 (available from DuPont in Wilmington, Delaware) were added. The reactor was held at 44-45°C for four hours and then at 60-63°C for 1 hour. The reactor was then cooled and the product transferred to storage.

The product formed had the following characteristics:

Polymer Composition of NaAc/AA      50/50 mole %
RSV @ 0.045% in 1M NaNO$_3$      20-40 dL/g

## Example 2

A 20/80 mole % AcAm/NaAc (acrylamide/sodium acrylate) copolymer backbone may be prepared in various levels of neutralization by using appropriate amounts of caustic. Specifically, a backbone wherein the neutralization of acrylic acid is about 50% was prepared as follows using reactants in the following amounts:

| Reactant | Amount (g) |
|---|---|
| Escaid 110 | 271.819 |
| Span 80 | 12.910 |
| Mackamid NOA | 12.910 |
| Hypermer | 2.640 |
| Acrylamide (48%) | 97.440 |
| Acrylic Acid | 187.690 |
| Deionized Water | 280.830 |
| Versene | 0.190 |
| Sodium Formate (10%) | 0.300 |
| Boric Anhydride | 2.620 |
| Sodium Hydroxide (50%) | 130.360 |
| Vazo 64 | 0.275 |
| Vazo 52 | 0.016 |

To prepare the polymer, a 1.5-liter polymerization reactor was equipped with a mechanical stirrer, an addition funnel, a nitrogen inlet, a thermocouple, and a condenser fitted with a nitrogen outlet. Escaid 110, Hypermer, Span 80 and Mackamid NOA (available from McIntyre Group Limited in University Park, Illinois) were weighed out in a beaker and warmed to 45°C. After 10 - 15 minutes, a clear solution was obtained, and it was transferred into the polymerization reactor. Next, an acrylamide solution, acrylic acid, and deionized water were taken in a beaker and cooled to 5°C. To the cooled and stirred solution of monomers, caustic was added dropwise, while the temperature was maintained below 25°C. Neutralization of acrylic acid was continued until the pH was about 5.1 - 5.3. Subsequently, the monomer solution was transferred into the reactor and stirred at 1200 rpm for 30 minutes while the reactor was heated to 33 - 36°C. After 30 minutes stirring, the reactor was heated to 43 - 44°C. Versene, boric anhydride, Vazo 52, and Vazo 64 were added. The reactor was held at 44 - 45°C for four hours and then at 60 - 63°C for 1 hour. The reactor was then cooled and the product transferred to storage. The product formed has the following characteristics:

Polymer Composition NaAc/AcAm    80/20 mole %
RSV @ 0.045% in 1M NaNO$_3$    40 - 70 dL/g

## Example 3

A 10/90 mole % AcAm/NaAc copolymer backbone may be prepared in various levels of neutralization by using appropriate amounts of caustic. Specifically, a backbone wherein the neutralization of acrylic acid is about 50% was prepared as follows utilizing reactants in the following amounts:

| Reactant | Amount (g) |
|---|---|
| Escaid 110 | 278.92 |
| Span 80 | 13.20 |
| Mackamid NOA | 13.20 |
| Hypermer | 2.640 |
| Acrylamide (48.6%) | 47.358 |
| Acrylic Acid | 217.259 |
| Deionized Water | 289.259 |
| Versene | 0.190 |
| Sodium Formate (10%) | 0.300 |
| Boric Anhydride | 2.000 |
| Sodium Hydroxide (50%) | 130.360 |
| Vazo 52 | 0.028 |
| Vazo 64 | 0.280 |
| 30% Sodium Thiosulfate | 10.00 |

To prepare the polymer, a 1.5 liter polymerization reactor was equipped with a mechanical stirrer, an addition funnel, a nitrogen inlet, a thermocouple, and a condenser fitted with a nitrogen outlet. Escaid 110, Hypermer, Span 80 and Mackamid NOA were weighed out in a beaker and warmed to 45°C. After 10 - 15 minutes, a clear solution was obtained, which was transferred into the polymerization reactor. Next, an acrylamide solution, acrylic acid, and deionized water were taken in a beaker and cooled to 5°C. To the cooled and stirred solution of monomers, caustic was added dropwise, while the temperature was maintained below 25°C. Neutralization of acrylic acid was continued until the pH was about 5.1 - 5.3. Subsequently, the monomer solution was transferred into the reactor and stirred at 1200 rpm for 30 minutes while the reactor was heated to 33 - 36°C. After 30 minutes of stirring, the reactor was heated to 43 - 44°C. Versene, boric anhydride, Vazo 52, and Vazo 64 were added. The reactor was held at 44 - 45°C for four hours and then at 60 - 63°C for 1 hour. Lastly, the reactor was cooled and the product transferred to storage. The product formed had the following characteristics:

Polymer Composition NaAc/AcAm      90/10 mole percent
RSV (@ 0.045 % in 1M NaNO$_3$      40 - 70 dL/g

**Example 4**

The synthesis of AcAm/NaAc/N-(trishydroxymethyl)methyl acrylamide terpolymer was effected with the following reactants in the following amounts:

| Reactant | Amount (g) |
|---|---|
| Poly(AcAm/NaAc), 10/90 mole % latex of Example 3 | 100.00 |
| Tris-hydroxymethylaminomethane | 10.00 |
| Escaid 110 | 20.00 |
| Brij 93 | 1.00 |
| Span 80 | 2.50 |
| Deionized Water | 25.00 |
| Sodium Hydroxide (50%) | 0.50 |

To prepare the polymer, Escaid 110, Span 80, and Brij 93 (available from ICI Americas in Wilmington, Delaware) were mixed in a beaker. AcAm/NaAc latex formed according to the procedure described in Example 3 was added into the beaker and stirred for 15 minutes. Next, Tris-hydroxymethylaminomethane (available from Angus Chemical Co., in Buffalo Grove, Illinois) was powdered and added into DI water kept well stirred at 25°C. The stirring was continued until a clear solution was obtained (about 5 - 10 minutes). Then, an aqueous solution of Tris-hydroxymethylaminomethane was added dropwise into the AcAm/NaAc latex mixture with vigorous stirring over a period of 15 minutes. Afterwards, the solution was stirred for another 15 minutes. The pH of the reaction mixture was measured using water-wet pH strips. Aqueous caustic was added to adjust the pH to about 5.5. Next, the reaction mixture was transferred into a 300 mL Parr reactor with a pressure rating of at least 800 psi. The reactor then was assembled and purged with nitrogen for 60 minutes. The Parr reactor was then slowly heated to 130°C (or above, as the case may be) and held at that temperature for 4 hours. Afterwards, the reactor was cooled to room temperature and the pressure released. The product was then transferred to storage.

$^{13}$C NMR confirmed product formation. The content of N-(trishydroxymethyl)methyl AcAm was 7 mole %. The product composition of the AcAm/N-(trishydroxymethyl)methyl acrylamide/NaAc terpolymer was 1/7/92 mole %, referred to as Polymer B.

## Example 5

The synthesis of a NaAc/N-(trishydroxymethyl)methyl acrylamide copolymer was effected in the following manner with the reactants in the amounts listed below:

| Reactant | Amount (g) |
|---|---|
| Poly(Acrylic Acid) of Example 1 | 100.00 |
| Tris-hydroxymethylaminomethane | 10.00 |
| Escaid 110 | 20.00 |
| Brij 93 | 1.00 |
| Span 80 | 2.50 |
| Deionized Water | 25.00 |
| Sodium Hydroxide (50%) | 1.5 |

To prepare the copolymer, Escaid 110, Span 80, and Brij 93 were mixed in a beaker. Then, poly(acrylic acid) latex formed according to the procedure described in Example 1 was added into the beaker and stirred for 15 minutes. Tris-hydroxymethylaminomethane was powdered and added into DI water kept well stirred at 25°C. The stirring was continued until a clear solution was obtained (about 5 -10 minutes). The aqueous solution of Tris-hydroxymethylaminomethane was then added dropwise into the poly(acrylic acid) mixture with vigorous stirring over a period of 15 minutes. Afterwards, it was stirred for another 15 minutes.

The pH of the reaction mixture was measured using water-wet pH strips. Aqueous caustic was added to adjust the pH to about 5.5. The reaction mixture was next transferred into a 300mL Parr reactor with a pressure rating of at least 800 psi. The reactor was assembled and purged with nitrogen for 60 minutes, then slowly heated to 140°C (or above, as the case may be) and held at that temperature for 2 hrs (or more, as the case may be). Afterwards, the reactor was cooled to room temperature and the pressure released. The product was then transferred to storage.

C$^{13}$ NMR analysis confirmed the product structure. The product composition of the NaAc/N-(trishydroxymethyl)methyl acrylamide copolymer was 94/6 mole percent.

## Example 6

The synthesis of an AcAm/NaAc/sodium acrylamido(3,4-dihydroxyphenyl) methane sulfonate terpolymer was effected in the following manner with reactants utilized in the following amounts:

| Reactant | Amount (g) |
|---|---|
| 90/10 mole % NaAc/AcAm of Example 3 | 150.0 |
| 3,4-dihydroxy benzyldehyde | 5.0 |
| Escaid 110 | 30.0 |
| Brij 93 | 2.00 |
| Span 80 | 3.00 |
| Deionized Water | 25.00 |
| Sodium bisulfite | 7.00 |

To prepare the desired terpolymer, Escaid 110, Span 80, and Brij 93 were mixed in a beaker. Then an AcAm/NaAc latex formed according to the procedure in Example 3 was added into the beaker and stirred for 15 minutes. Separately, 3,4-dihydroxy benzyldehyde (available from Aldrich Chemical Co. in Milwaukee, Wisconsin) was powdered and added into DI water kept well stirred at 85°C. The stirring was continued until a clear solution was obtained (about 5 - 10 minutes). Then sodium bisulfite was added and stirring continued for 5 minutes.

The above benzaldehyde solution was added dropwise into the latex mixture with vigorous stirring over a period of 15 minutes. Afterwards, it was stirred for another 15 minutes. The pH of the reaction mixture was measured using water-wet pH strips. Aqueous caustic was added to adjust the pH to about 5.8. The reaction mixture was next transferred into a 300 mL Parr reactor with a pressure rating of at least 800 psi. The reactor was assembled and purged with nitrogen for 60 minutes, then slowly heated to 150°C (or above, as the case may be) and held at that temperature for 4 hours (or more, as the case may be). Afterwards, the reactor was cooled to room temperature, the pressure released and the product was then transferred to storage.

$C_{13}$ - NMR analysis indicated the product as a NaAc/AcAm/sodium acryamido(3,4-dihydroxyphenyl) methane sulfonate terpolymer having an 87/2/11 mole % ratio, referred to as Polymer A.

**Example 7**

The synthesis of a NaAc/sodium acrylamido(2-hydroxyphenyl) methane sulfonate copolymer was effected in the following manner with the reactants in the following amounts:

| Reactant | Amount (g) |
|---|---|
| 90/10 mole % AcAm/NaAc latex of Example 3 | 100.00 |
| Salicylaldehyde | 6.2 |
| Escaid 110 | 30.00 |
| Brij 93 | 2.00 |
| Span 80 | 3.00 |
| Deionized Water | 40.00 |
| Sodium Bisulfite | 7.80 |

To prepare the polymer, Escaid 110, Span 80, and Brij 93 were mixed in a beaker. Then, a NaAc/AcAm latex prepared according to the procedure of Example 3 was added into the beaker and stirred for 15 minutes. Salicylaldehyde (available from Aldrich Chemical Co. in Milwaukee, Wisconsin) was added into DI water kept well stirred at 20°C. Sodium bisulfite was added to that solution and stirring continued for 15 minutes. Next, the above solution of salicylaldehyde was added dropwise into the latex mixture with vigorous stirring over a period of 15 minutes. Afterwards, it was stirred for another 15 minutes. The pH of the reaction mixture was then measured using water-wet pH strips. Aqueous caustic was added to adjust the pH to about 5.4. Next, the reaction mixture was transferred into a 300 mL Parr reactor with a pressure rating of at least 800 psi. The reactor was assembled and purged with nitrogen for 60 minutes, then slowly heated to 140°C (or above, as the case may be) and held at that temperature for 4 hours (or more, as the case may be). Afterwards, the reactor was cooled to room temperature, the pressure released and the product was then transferred to storage.

The product was identified by C$^{13}$ NMR as NaAc/sodium acrylamido(2-hydroxyphenyl) methane sulfonate 90/10, mole %, referred to as Polymer C.

## Example 8

The synthesis of an AcAm/NaAc/sodium acrylamido(2-hydroxyphenyl) methane sulfonate terpolymer was effected in the following manner with the reactants in the following amounts:

| Reactant | Amount(g) |
|---|---|
| 80/20 mole % NaAc/AcAm polymer of Example 2 (50% acrylic acid neutralized) | 100.00 |
| Escaid 110 | 20.00 |
| Brij 93 | 1.00 |
| Span 80 | 2.50 |
| Deionized Water | 25.00 |
| Sodium m-bisulfite | 8.00 |
| Salicylaldehyde | 8.20 |

To form the terpolymer, Escaid 110, Span 80, and Brij 93 were mixed in a beaker. Then the NaAc/AcAm lattice prepared according to Example 2 was added into the beaker and stirred for 15 minutes. Separately, sodium m-bisulfite was taken in DI water, and stirred well at ambient temperature. Salicylaldehyde was then added dropwise to the bisulfite solution over a period of 5 minutes. The stirring was continued until a clear solution was obtained (about 5-10 minutes). This salicylaldehyde/sodium bisulfite adduct solution was then added dropwise into the NaAc/AcAm oil mixture with vigorous stirring over a period of 15 minutes. Afterwards, it was stirred for another 15 minutes, while the pH of the reaction mixture was measured using water-wet pH strips and adjusted to about 5.5 Next, the reaction mixture was transferred into a 300 mL Parr reactor with a pressure rating of at least 800 psi and was purged with nitrogen for 60 minutes, followed by slowly heated to 140°C and holding at that temperature for 4 hours. Afterwards, the reactor was cooled to room temperature and the pressure released.

NMR characterization indicated the composition of the product to be NaAc/AcAm/sodium acrylamido(2-hydroxyphenyl) methane sulfonate in an 82/2/16 mole %. The RSV was 18.3 dL/g in 1M NaNO$_3$ for 0.045 % polymer.

## Example 9

The synthesis of N-(trishydroxy methyl)methyl acrylamide/sodium acrylate (10/90 mole %) copolymer was effected in the following manner with the reactants in the following amounts:

| Reactant | Amount(g) |
|---|---|
| Escaid 110 | 156.00 |
| Span 80 | 7.41 |
| Mackamid NOA | 1.51 |
| Hypermer | 7.41 |
| N-(trishydroxymethyl) methyl acrylamide | 21.28 |
| Acrylic Acid | 78.72 |
| Deionized Water | 148.18 |
| Versene (10%) | 0.50 |
| Sodium Formate (10%) | 0.10 |
| Sodium Hydroxide (50%) | 78.72 |
| Vazo 64 | 0.15 |
| Vazo 52 | 0.02 |

To form the copolymer, a 1.0-liter polymerization reactor was equipped with a mechanical stirrer, an addition funnel, a nitrogen inlet, a thermocouple, and a condenser fitted with a nitrogen outlet. Escaid 110, Hypermer, Span 80 and Mackamide NOA were weighed out in a beaker and warmed to 45°C. After 10 - 15 minutes, a clear solution was obtained, and it was transferred into the polymerization reactor. Separately, N-(trishydroxymethyl)methyl acrylamide, acrylic acid, and deionized water were taken in a beaker and cooled to 5°C. To that cooled and stirred solution of monomers, caustic was added dropwise, while the temperature was maintained below 25°C. Neutralization of acrylic acid was continued and the pH measured.

The monomer solution was transferred into the reactor and stirred at 1200 rpm for 30 minutes, followed by heating of the reactor to 33-36°C. After 30 minutes of stirring, the reactor was heated to 43-44°C, and Versene, boric anhydride, Vazo 52, and Vazo 64 were added. The reactor was held at 44-45°C for four hours and then at 60-63°C for one hour. Finally, the reactor was then cooled and the product transferred to storage.

The resultant polymer had the following characteristics:

RSV: 11.33 dL/g For 0.045% polymer in 1M $NaNO_3$

Polymer solids: 20%

Polymer Composition: NaAc/ N-(trishydroxymethyl)methyl AcAm 90/10 mole %. The unique aspect of this synthesis was that the functional group of interest was incorporated by polymerization not in a post-polymerization modification procedure as indicated in the other Examples.

**Example 10**

To determine the effectiveness of various compounds as stabilizers, the following solutions were prepared:

A. No. 13 Water: water made by adding 208.5g $CaCl_2$ ($2H_2O$), 174.8g $MgSO_4$ ($7H_2O$), and 174.9g $NaHCO_3$ to 250 gallons of DI water, to make a standard solution containing 150 ppm calcium, 75 ppm magnesium, and 110 ppm alkalinity (all as calcium carbonate).

B. 10 ppm Mn Solution: made by adding one milliliter of a 10,000 ppm Mn solution to a one liter volumetric flask using volumetric pipettes (±0.006) and diluting to one liter with No. 13 water.

C. 10 ppm Fe Solution: made by adding one milliliter of 10,000 ppm Fe solution to a liter volumetric flask using volumetric pipettes (±0.006) and diluting to one liter with No. 13 water.

D. 100 ppm Fe Solution: made by adding ten milliliters of 10,000 ppm Fe solution to a one liter volumetric flask using volumetric pipettes (±0.006) and diluting to one liter with No. 13 water.

E. Actives Solutions formed from forty 1% solutions were prepared. The solutions were prepared by adding the appropriate amounts of the ingredients and diluting with 99.0 g of No. 13 water.

Solutions prepared above were utilized to evaluate effectiveness according to the following procedure. Ninety-two grams of 10 ppm Mn solution, 0.5g sodium hydroxide solution, 3.0 g of the 1% active solution containing the specific compound to be tested, and 4.0 g hydrogen peroxide were added. The mixture was stirred for 30 seconds and then three milliliters of the solution were removed and the peroxide residual determined as described below. After 30 min. three more milliliters were removed and the peroxide residual determined again the same way.

A titration was utilized to determine the amount of peroxide residual according to the following procedure. Three milliliters of the filtrate were pipeted into a solution containing 100 ml 1% potassium iodide, 3 milliliters acetic acid, and 3 drops 5% ammonium molybdate. Next, the solution was titrated with 0.1 N sodium thiosulfate. Just before the final end-point, 5 drops of starch indicator were added. Peroxide residual was calculated according to the following formula:

$$\text{g/L peroxide residual} = \frac{17 \times 0.1 \times \text{ml of thiosulfate consumed}}{\text{ml filtrate}}$$

For the purposes of these tests, a smaller decrease in peroxide (lower value) indicates that the compound is more effective as a peroxide stabilizer. The results of Table I illustrate the effectiveness of various compounds.

TABLE I

| Peroxide Stability in the Presence of 10 ppm Mn | | |
|---|---|---|
| Treatment | % decrease in peroxide | pH |
| none | 52.8 | 10.9 |
| diethylenetriaminepentaacetic acid | 26.7 | 10.8 |
| polymer A[1] | 28.9 | 11.1 |
| poly(aspartic acid) | 34.8 | 10.8 |
| polymer B[2] | 35.2 | 11.0 |
| citric acid | 37.7 | 10.8 |
| versene 100[4] | 39.3 | 10.8 |
| polymer C[3] | 40.6 | 10.9 |
| poly(acrylamide/acrylic acid), 77/23 mole ratio | 43.5 | 10.8 |
| tris(hydroxymethyl)aminomethane | 50.7 | 10.9 |
| poly(dithiocarbamate) | 59.9 | 10.8 |
| sodium gluconate | 65.1 | 10.8 |
| sodium glucoheptonate | 67.2 | 10.8 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = available from Dow Chemical Company in Midland, Michigan

**Example 11**

The procedure described in Example 10 was utilized to obtain the results of Table II with the following modifications. Ninety-two grams of 10 ppm Fe solution, 0.5g sodium hydroxide solution, 3.0 g of the 1% active solution containing the treatment chemical to be tested, and 4.0 g hydrogen peroxide were combined to form the test solution.

TABLE II

| Peroxide Stability in the Presence of 10 ppm Fe | | |
|---|---|---|
| Treatment | % decrease in peroxide | pH |
| none | 21.65 | 10.9 |
| diethylenetriaminepentaacetic acid | 2.44 | 10.8 |
| polymer A[1] | 1.46 | 10.9 |
| poly(aspartic acid) | 1.78 | 10.8 |
| polymer B[2] | 7.32 | 11.0 |
| citric acid | 0.97 | 10.7 |
| versene 100[4] | 1.47 | 10.8 |
| polymer C[3] | 40.56 | 10.9 |
| poly(acrylamide/acrylic acid), 77/23 mole ratio | 0.65 | 10.9 |
| tris(hydroxymethyl) amino methane | 0.98 | 10.8 |
| poly(dithiocarbamate) | 20.27 | 10.8 |
| sodium gluconate | 7.04 | 10.8 |
| sodium glucoheptonate | 1.34 | 10.7 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = Available from Dow Chemical Company in Midland, Michigan

**Example 12**

To obtain the results of Table III, one gram of oven dried kraft pulp (3.5 g wet pulp) was placed in a 250 milliliter tripour beaker. The kraft pulp was obtained after the point of oxygen delignification in a Southeastern paper mill. The pulp was washed with No. 13 water at 1% consistency (with #13 water), and filtered through a Buchner funnel until the first stages of drying were evident. The pulp was then covered and left under vacuum for 15 minutes. Consistency of the resultant pulp was measured, and then the pulp was autoclaved for 30 minutes to destroy any bacteria.

Then 89.0 g of 10 ppm Mn solution, 0.5g sodium hydroxide solution, 3.0 g of the 1% active solution containing the treatment compound to be tested, and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE III

| Peroxide Stability in the Presence of 10 ppm Mn and Kraft Pulp | |
|---|---|
| Treatment | % decrease in peroxide |
| none | 63.8 |
| diethylene triamine pentaacetic acid | 34.5 |
| polymer A[1] | 34.4 |
| citric acid | 50.7 |
| polymer B[2] | 30.6 |
| poly(aspartic acid) | 50.7 |
| versene 100[5] | 57.2 |
| polymer C[3] | 39.6 |
| poly(acrylamide/acrylic acid), 77/23 mole ratio | 53.1 |
| tris(hydroxymethyl) aminomethane | 47.0 |
| poly(dithiocarbamate) | 72.5 |
| sodium gluconate | 69.6 |
| sodium glucoheptonate | 77.5 |
| quaternary ammonium salts[4] | 54.4 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = 49.8% N-alkyl dimethyl benzyl ammonium chloride and 0.2% N-dialkyl methyl benzyl ammonium chloride in aqueous solution
5 = available from Dow Chemical Co. in Midland Michigan

## Example 13

To obtain the results of Table IV, one gram of oven dried kraft pulp (3.5 g wet pulp) was placed in a 250 milliliter tripour beaker. Then 89.0 g of 10 ppm Fe solution, 0.5g sodium hydroxide solution, 3.0 g of the 1% active solution containing the treatment compound to be tested, and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE IV

| Peroxide Stability in the Presence of 100 ppm Fe and Kraft Pulp | |
|---|---|
| **Treatment** | **% decrease in peroxide** |
| none | 30.9 |
| diethylenetriaminepentaacetic acid | 42.2 |
| polymer A[1] | 28.4 |
| poly(aspartic acid) | 36.6 |
| polymer B[2] | 24.4 |
| citric acid | 31.4 |
| versene 100[5] | 26.5 |
| polymer C[3] | 38.4 |
| poly(acrylamide/acrylic acid), 77/23 mole ratio | 33.1 |
| tris(hydroxymethyl)aminomethane | 34.5 |
| sodium gluconate | 27.8 |
| sodium glucoheptonate | 36.7 |
| quaternary ammonium salts[4] | 31.2 |

1 = Poly(acrylamide/sodium acrylate/sodium acrylamido(3,4-dihydroxyphenyl) methane sulfonate), 2/87/11 mole ratio
2 = Poly(acrylamide/sodium acrylate(N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = 49.8% N-alkyl dimethyl benzyl ammonium chloride and 0.2% N-dialkyl methyl benzyl ammonium chloride in aqueous solution
5 = available from Dow Chemical Co. in Midland, Michigan

**Example 14**

To obtain the results of Table V, one gram of oven dried mechanical pulp (3.4 g wet pulp) was placed in a 250 milliliter tripour beaker. The mechanical pulp was obtained and prepared according to the procedure described in Example 12. Then 89.1 g of 10 ppm Mn solution, 0.5g sodium hydroxide solution, 3.0 g of the 1% active solution containing the treatment compound to be tested, and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE V

| Peroxide Stability in the Presence of 10 ppm Mn and Mechanical Pulp | |
|---|---|
| **Treatment** | **% decrease in peroxide** |
| none | 64.23 |
| diethylenetriaminepentaacetic acid | 40.97 |
| polymer A[1] | 47.58 |
| polymer B[2] | 43.49 |
| citric acid | 74.19 |
| versene 100[6] | 72.77 |
| polymer C[3] | 45.54 |
| poly(acrylamide/acrylic acid), 77/23 mole ratio | 74.03 |
| tris(hydroxymethyl)aminomethane | 65.21 |
| sodium glucoheptonate | 79.38 |
| polymer D[5] | 47.43 |
| sodium gluconate | 75.29 |
| poly(aspartic acid),10K | 51.68 |
| poly(aspartic acid), 18K | 65.69 |
| quaternary ammonium salts[4] | 78.44 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = 49.8% N-alkyl dimethyl benzyl ammonium chloride and 0.2% N-dialkyl methyl benzyl ammonium chloride in aqueous solution
5 = poly(acrylamide/sodium acrylate/acrylic acid), 20/70/10 mole ratio
6 = available from Dow Chemical Company in Midland, Michigan

**Example 15**

To obtain the results of Table VI, one gram of oven dried mechanical pulp (3.4 g wet pulp) was placed in a 250 milliliter tripour beaker. Then 89.1 g of 100 ppm Fe solution, 0.5g sodium hydroxide solution, 3.0 g of the 1% active solution containing the compound to be tested, and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE VI

| Peroxide Stability in the Presence of 100 ppm Fe and Mechanical Pulp | |
|---|---|
| **Treatment** | **% decrease in peroxide** |
| none | 37.23 |
| diethylenetriaminepentaacetic acid | 18.94 |
| polymer A[1] | 27.59 |
| polymer B[2] | 31.84 |
| citric acid | 27.44 |
| versene 100[6] | 43.02 |
| polymer C[3] | 30.11 |
| poly(acrylamide/acrylic acid), 77/23 mole ratio | 36.41 |
| tris(hydroxymethyl)aminomethane | 38.45 |
| sodium glucoheptonate | 34.52 |
| polymer D[5] | 26.18 |
| sodium gluconate | 32.47 |
| poly(aspartic acid), 10K | 28.06 |
| poly(aspartic acid), 18K | 29.48 |
| quaternary ammonium salts[4] | 33.73 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = 49.8% N-alkyl dimethyl benzyl ammonium chloride and 0.2% N-dialkyl methyl benzyl ammonium chloride in aqueous solution
5 = poly(acrylamide/sodium acrylate/acrylic acid), 20/70/10 mole ratio
6 = available from Dow Chemical Co. in Midland, Michigan

**Example 16**

To obtain the results of Table VII, one gram of oven dried mechanical pulp (3.14 g wet pulp) was placed in a 250 milliliter tripour beaker. Then 89.3g of high iron solution (one milliliter of 10,000 ppm Mn solution and ten milliliters of 10,000 ppm Fe solution added to a one liter volumetric flask using volumetric pipettes (±0.006) and diluted to one liter with No. 13 water), 0.5 g sodium hydroxide solution, 3.0 g of each of the 1% active solution containing the treatment compound to be tested, and 4.0 g hydrogen peroxide were added to form a pulp slurry and mixed 30 min. The pulp solids were then separated from the pulp slurry on a glass funnel, and the peroxide residual determined described in Example 10.

TABLE VII

| Peroxide Stability in the Presence of 10 ppm Mn, 100 ppm Fe and Mechanical Pulp | |
|---|---|
| **Treatment** | **% decrease in peroxide** |
| none | 84.0 |
| diethylenetriaminepentaacetic acid | 47.1 |
| polymer A[1] | 46.6 |
| polymer B[2] | 46.8 |
| polymer C[3] | 51.0 |
| sodium gluconate | 63.8 |
| sodium glucoheptonate | 76.2 |
| poly(aspartic acid), 10K | 59.2 |
| poly(aspartic acid), 18K | 51.8 |
| quaternary ammonium salts[4] | 89.9 |

1 = Poly(acrylamide/sodium acrylate/sodium acrylamido(3,4-dihydroxyphenyl) methane sulfonate), 2/87/11 mole ratio
2 = Poly(acrylamide/sodium acrylate/N-(trishydroxymethyl)methyl acrylamide), 1/92/7 mole ratio
3 = Poly(sodium acrylate/sodium acrylamido(2-hydroxyphenyl) methane sulfonate), 90/10 mole ratio
4 = 49.8% N-alkyl dimethyl benzyl ammonium chloride and 0.2% N-dialkyl methyl benzyl ammonium chloride in aqueous solution

**Example 17**

To obtain the results of Table VIII, the procedure described in Example 17 was utilized.

TABLE VIII

| Mechanical Pulp High Iron Content | | |
|---|---|---|
| Compound 1 | Compound 2 | g/L peroxide |
| --- | --- | 1.11 |
| DTPA[1] | --- | 2.52 |
| NaGH[5] | --- | 1.79 |
| polymer B[3] | --- | 2.4 |
| sodium gluconate | NaGH[5] | 4.82 |
| Quats[4] | NaGH[5] | 2.49 |
| sodium gluconate | EDTA[6] | 3.94 |
| polymer B[3] | sodium gluconate | 3.02 |
| Citric acid | Quats[4] | 2.13 |
| Citric acid | NaGH[5] | 2.97 |
| DTPA[1] | NaGH[5] | 2.47 |
| DTPA[1] | Quats[4] | 1.42 |
| DTPA[1] | sodium gluconate | 2.1 |
| polymer B[3] | NaGH[5] | 2.46 |
| poly(aspartic acid) | none | 2.85 |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and
0.2% N-dialkyl methyl benzyl ammonium chloride in aqueous solution
5 = sodium glucoheptonate
6 = ethylenediaminetetraacetic acid

**Example 18**

To obtain the results of Table IX, one g of oven dried mechanical pulp (3.14 g wet pulp) was placed in a 250 milliliter tripour beaker. Then 89.3 g of low iron solution, (one milliliter of 10,000 ppm Fe solution added to a one liter volumetric flask using volumetric pipettes (±0.006) and diluted to one liter. One milliliter of this solution was added to a one liter volumetric flask with one milliliter of 10,000 ppm Mn and diluted to one liter with No. 13 water), 0.5g sodium hydroxide solution, 3.0 g of each of the 1% active solution containing the treatment compound to be tested, and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE IX

| Mechanical Pulp Low Iron Content | | |
|---|---|---|
| **Compound 1** | **Compound 2** | **g/L peroxide** |
| --- | --- | 5.40 |
| DTPA[1] | --- | 5.95 |
| NaGH[5] | --- | 5.16 |
| DTPA[1] | Citric acid | 7.74 |
| DTPA[1] | sodium gluconate | 7.16 |
| sodium gluconate | Quats[4] | 6.99 |
| DTPA[1] | Quats[4] | 6.89 |
| polymer B[3] | sodium gluconate | 6.65 |
| polymer B[3] | EDTA[6] | 6.40 |
| Poly(aspartic acid) | Quats[4] | 6.33 |
| Poly(aspartic acid) | DTPA[1] | 6.25 |
| polymer B[3] | NaGH[5] | 6.20 |
| DTPA[1] | sodium gluconate | 6.14 |
| Poly(aspartic acid) | EDTA[6] | 6.06 |
| Poly(aspartic acid) | NaGH[5] | 5.72 |
| Poly(aspartic acid) | EDTA[6] | 5.65 |
| sodium gluconate | EDTA[6] | 5.02 |
| Citric acid | EDTA[6] | 6.01 |
| polymer B[3] | ------ | 5.57 |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and
0.2% N-dialkyl methyl benzyl ammonium chloride in aqueous solution
5 = sodium glucoheptonate
6 = ethylenediaminetetraacetic acid

**Example 19**

To obtain the results of Table X, one g of oven dried kraft pulp (3.14 g wet pulp) was placed in a 250 milliliter tripour beaker. Then 89.3 g of high iron solution (one milliliter of 10,000 ppm Mn solution and ten milliliters of 10,000 ppm Fe solution were added to a one liter volumetric flask using volumetric pipettes (±0.006) and diluted to one liter with No. 13 water), 0.5 g sodium hydroxide solution, 3.0 g of each of the 1% active solution containing the treatment compound to be tested , and 4.0 g hydrogen peroxide were added to form a pulp slurry and mixed 30 min. The pulp solids were then separated from the pulp slurry on a glass funnel, and the peroxide residual determined on the filtrate as described in Example 10.

TABLE X

| Kraft Pulp High Iron Content | | |
|---|---|---|
| Compound 1 | Compound 2 | g/L peroxide |
| --- | --- | 1.13 |
| DTPA[1] | --- | 1.47 |
| NaGH[5] | --- | 0.57 |
| Poly(aspartic acid) | EDTA[6] | 2.32 |
| Poly(aspartic acid) | Citric acid | 2.36 |
| polymer B[3] | DTPA[1] | 2.91 |
| polymer B[3] | Quats[4] | 1.42 |
| DTPA[1] | sodium gluconate | 1.42 |
| DTPA[1] | Citric acid | 1.53 |
| Poly(aspartic acid) | NaGH[5] | 1.08 |
| Poly(aspartic acid) | --- | 3.74 |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and
0.2% N-dialkyl methyl benzyl ammonium chloride in aqueous solution
5 = sodium glucoheptonate
6 = ethylenediaminetetraacetic acid

**Example 20**

To obtain the results of Table XI, one g of oven dried mechanical pulp (3.14 wet pulp) was placed in a 250 milliliter tripour beaker. Than 89.3 g of low iron solution (one milliliter of 10,000 ppm Fe solution added to a one liter volumetric flask using volumetric pipettes ($\pm$0.006) and diluted to one liter. One milliliter of this solution was added to a one liter volumetric flask with one milliliter of 10,000 ppm Mn and diluted to one liter with No. 13 water), 0.5 g sodium hydroxide solution, 3.0 g of each of the 1% active solution containing the treatment compound to be tested, and 4.0 hydrogen peroxide were added to form a pulp slurry and mixed 30 min. The pulp solids were then separated from the pulp slurry on a glass funnel, and the peroxide residual determined on the filtrate as described in Example 10.

TABLE XI

| Kraft Pulp Low Iron Content | | |
|---|---|---|
| **Compound 1** | **Compound 2** | **g/L peroxide** |
| --- | --- | 2.59 |
| DTPA[1] | --- | 2.52 |
| NaGH[5] | --- | 1.93 |
| sodium gluconate | EDTA[6] | 2.22 |
| polymer B[3] | DTPA[1] | 3.53 |
| Citric acid | EDTA[6] | 2.27 |
| Citric acid | Quats[4] | 2.23 |
| Citric acid | NaGH[5] | 2.32 |
| DTPA[1] | EDTA[6] | 2.49 |
| Quats[4] | NaGH[5] | 2.23 |
| polymer B[3] | Quats[4] | 3.43 |
| polymer B[3] | DTPA[1] | 3.53 |
| polymer B[3] | Citric acid | 2.51 |
| polymer B[3] | EDTA[6] | 2.36 |
| DTPA[1] | Quats[4] | 2.41 |
| sodium gluconate | NaGH[5] | 2.29 |

1 = diethylenetriaminepentaacetic acid
3 = poly[acrylamide/sodium acrylate/N-(trishydroxymethyl)methyl acrylamide], 1/92/7 mole ratio
4 = 49.8% N-alkyl dimethyl benzyl ammonium chloride and 0.2% N-dialkyl methyl benzyl ammonium chloride in aqueous solution
5 = sodium glucoheptonate
6 = ethylenediaminetetraacetic acid

**Example 21**

The experimental results of Examples 10 - 20 were statistically analyzed to further emphasize the synergistic effect of the combinations of certain compounds as stabilizers. The raw data itself is indicative of synergism, as the amount of peroxide increases when the combination treatment is added, as compared to single component treatments. This raw data was further manipulated using standard statistical techniques to generate a model which mathematically predicts the residual peroxide based on what active or two actives are present. A coefficient which is a multiplication factor was calculated for each combination. A positive calculated coefficient for the combination of actives is further evidence that the combination has a greater than expected ability to preserve peroxide. This positive coefficient for the combination of actives is the proof of synergy, and is indicated in the table as a "yes" if synergy exists according to the calculations, as indicated in Table XII.

TABLE XII

| Synergy Calculations for Mechanical Pulp Under High Iron Conditions | | | |
|---|---|---|---|
| Treatment | | Results | |
| Compound 1 | Compound 2 | Residual Peroxide (g/L) | Synergy |
| --- | --- | 1.11 | --- |
| Polymer B[3] | --- | 2.4 | --- |
| Poly(aspartic acid) | --- | 2.85 | --- |
| DTPA[1] | --- | 2.52 | --- |
| Citric Acid | --- | 3.08 | --- |
| Sodium Gluconate | --- | 1.38 | --- |
| Quats[4] | --- | 0.61 | --- |
| NaGH[5] | --- | 1.79 | --- |
| EDTA[6] | --- | 1.98 | --- |
| Polymer B[3] | Sodium Gluconate | 3.02 | yes |
| Polymer B[3] | NaGH[5] | 2.46 | yes |
| DTPA[1] | Sodium Gluconate | 2.1 | yes |
| DTPA[1] | Quats[4] | 1.42 | yes |
| DTPA[1] | NaGH[5] | 2.47 | yes |
| Citric Acid | Quats[4] | 2.13 | yes |
| Citric Acid | NaGH[5] | 2.97 | yes |
| Sodium Gluconate | NaGH[5] | 4.82 | yes |
| Sodium Gluconate | EDTA[6] | 3.94 | yes |
| Quats[4] | NaGH[5] | 2.49 | yes |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and 0.2% N-dialkyl methyl benzyl ammonium chloride in aqueous solution
5 = sodium glucoheptonate
6 = ethylenediaminetetraacetic acid

**Example 22**

The procedure of Example 21 was utilized to obtain the results of Table XIII.

EP 0 831 169 A2

TABLE XIII

| Synergy Calculations for Mechanical Pulp Under Low Iron Conditions | | | |
|---|---|---|---|
| Treatment | | Results | |
| Compound 1 | Compound 2 | Residual Peroxide (g/L) | Synergy |
| --- | --- | 5.4 | --- |
| Polymer B[3] | --- | 5.57 | --- |
| Poly(aspartic acid) | --- | 5.02 | --- |
| DTPA[1] | --- | 5.95 | --- |
| Citric Acid | --- | 3.63 | --- |
| Sodium Gluconate | --- | 3.32 | --- |
| Quats[4] | --- | 3.51 | --- |
| NaGH[5] | --- | 5.16 | --- |
| EDTA[6] | --- | 4.82 | --- |
| Polymer B[3] | Sodium Gluconate | 6.65 | yes |
| Polymer B[3] | Quats[4] | 6.20 | yes |
| Polymer B[3] | EDTA[6] | 6.4 | yes |
| Poly(aspartic acid) | DTPA[1] | 6.25 | yes |
| Poly(aspartic acid) | Citric Acid | 6.06 | yes |
| Poly(aspartic acid) | Quats[4] | 6.33 | yes |
| Poly(aspartic acid) | NaGH[5] | 5.65 | yes |
| Poly(aspartic acid) | EDTA[6] | 5.72 | yes |
| DTPA[1] | Citric Acid | 7.74 | yes |
| DTPA[1] | Sodium Gluconate | 7.16 | yes |
| DTPA[1] | Quats[4] | 6.89 | yes |
| DTPA[1] | NaGH[5] | 6.14 | yes |
| Citric Acid | EDTA[6] | 6.01 | yes |
| Sodium Gluconate | Quats[4] | 6.99 | yes |
| Sodium Gluconate | EDTA[6] | 5.02 | --- |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and 0.2% N-dialkyl methyl benzyl ammonium chloride in aqueous solution
5 = sodium glucoheptonate
6 = ethylenediaminetetraacetic acid

**Example 23**

The procedure of Example 21 was utilized to obtain the results of Table XIV.

TABLE XIV

| Synergy Calculations for Kraft Pulp Under High Iron Conditions | | | |
|---|---|---|---|
| Treatment | | Results | |
| Compound 1 | Compound 2 | Residual Peroxide (g/L) | Synergy |
| --- | --- | 1.13 | --- |
| Polymer B[3] | --- | 0.89 | --- |
| Poly(aspartic acid) | --- | 3.74 | --- |
| DTPA[1] | --- | 1.47 | --- |
| Citric Acid | --- | 1.96 | --- |
| Sodium Gluconate | --- | 2.63 | --- |
| Quats[4] | --- | 0.94 | --- |
| NaGH[5] | --- | 0.57 | --- |
| EDTA[6] | --- | 1.13 | yes |
| Polymer B[3] | DTPA[1] | 2.91 | yes |
| Polymer B[3] | Citric Acid | 1.53 | yes |
| Polymer B[3] | Quats[4] | 1.42 | yes |
| Polymer B[3] | EDTA[6] | 1.13 | yes |
| DTPA[1] | Quats[4] | 1.47 | yes |
| DTPA[1] | EDTA[6] | 1.79 | yes |
| Citric Acid | Quats[4] | 2.12 | yes |
| Citric Acid | NaGH[5] | 2.04 | yes |
| Citric Acid | EDTA[6] | 2.83 | yes |
| Sodium Gluconate | NaGH[5] | 2.12 | yes |
| Sodium Gluconate | EDTA[6] | 3.1 | yes |
| Quats[4] | NaGH[5] | 1.45 | yes |

1 = diethylenetriaminepentaacetic acid
3 = poly(acrylamide/sodium acrylate/N-(trishydroxymethyl)methyl acrylamide),
1/92/7 mole ratio
4 = 49.8% N-alkyl dimethyl benzyl ammonium chloride and 0.2% N-dialkyl
methyl benzyl ammonium chloride in aqueous solution
5 = sodium glucoheptonate
6 = ethylenediaminetetraacetic acid

**Example 24**

The procedure of Example 21 was utilized to obtain the results of Table XV.

TABLE XV

| Synergy Calculations for Kraft Pulp Under Low Iron Conditions | | | |
|---|---|---|---|
| Treatment | | Results | |
| Compound 1 | Compound 2 | Residual Peroxide (g/L) | Synergy |
| --- | --- | 2.59 | --- |
| Polymer B[3] | --- | 2.53 | --- |
| Poly(aspartic acid) | --- | 2.11 | --- |
| DTPA[1] | --- | 2.52 | --- |
| Citric Acid | --- | 2.1 | --- |
| Sodium Gluconate | --- | 3.18 | --- |
| Quats[4] | --- | 2.83 | --- |
| NaGH[5] | --- | 1.93 | --- |
| EDTA[6] | --- | 3.15 | --- |
| Polymer B[3] | DTPA[1] | 3.53 | yes |
| Polymer B[3] | Quats[4] | 3.43 | yes |
| Poly(aspartic acid) | Citric Acid | 3.87 | yes |
| Poly(aspartic acid) | NaGH[5] | 2.74 | yes |
| Poly(aspartic acid) | EDTA[6] | 4.27 | yes |
| DTPA[1] | Citric Acid | 3.15 | yes |
| DTPA[1] | Sodium Gluconate | 3.32 | yes |

1 = diethylenetriaminepentaacetic acid
3 = poly(acrylamide/sodium acrylate/N-(trishydroxymethyl)methyl acrylamide), 1/92/7 mole ratio
4 = 49.8% N-alkyl dimethyl benzyl ammonium chloride and 0.2% N-dialkyl methyl benzyl ammonium chloride in aqueous solution
5 = sodium glucoheptonate
6 = ethylenediaminetetraacetic acid

**Example 25**

Oven dried pulp, also referred to as bone dry pulp and abbreviated as ODP, is formed under moisture-free condition. It is usually formed by drying a known sample to a constant weight in a completely dry atmosphere at a temperature of 100°C to 105°C. Two units/g oven dried pulp of xylanse and 0.1% (based on ODP) of sodium glucoheptonate would be added to a solution as described in Example 10 at pH 4.0 and let to react for 30 min in the presence and absence of metal treatment and washed. Subsequently, the pH of the pulp would be adjusted to 11.1 and the pulp would be bleached with 1.5% peroxide on ODP for one hour. The pulp would be washed and brightness measured.

Changes can be made in the composition, operation and arrangement of the method of the present invention described herein without departing from the concept and scope of the invention as defined in the following claims:

**Claims**

1. A method for ameliorating oxygen-based treatments of cellulosic materials in aqueous systems comprising adding to an aqueous system containing cellulosic materials an effective oxygen-based treatment stabilizing amount of a compound selected from the group consisting of tris(hydroxymethyl)aminomethane, N-alkyl dimethyl benzyl ammonium chloride, N-dialkyl methyl benzyl ammonium chloride and combinations thereof.

2. The method of Claim 1 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

3. The method of Claim 2 wherein the aqueous system is a pulp and paper system.

4. The method of Claim 3 wherein from about 0.0001 to about 2.0 percent by weight of compound is added based on the dry weight of the cellulosic material.

5. The method of Claim 3 wherein from about 0.01 to about 1.0 percent by weight of compound is added based on the dry weight of the cellulosic material.

6. The method of Claim 3 wherein from about 0.1 to about 0.8 percent by weight of compound is added based on the dry weight of the cellulosic material.

7. A method for ameliorating oxygen-based treatments of cellulosic materials in aqueous systems comprising adding to an aqueous system containing cellulosic materials an effective oxygen-based treatment stabilizing amount of a combination of:

   a) diethylenetriaminepentaacetic acid and

   b) a second compound selected from the group consisting of citric acid, sodium gluconate, sodium glucoheptonate, ethylenediaminetetraacetic acid, tris (hydroxymethyl)aminomethane, and a combination of N-alkyl dimethyl benzyl ammonium chloride and N-dialkyl methyl benzyl ammonium chloride.

8. The method of Claim 7 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

9. The method of Claim 8 wherein the aqueous system is a pulp and paper system.

10. The method of Claim 7 wherein the mole ratio of diethylenetriaminepentaacetic acid to the second compound is from 0.001: 99.999 to 99.999:0.001.

11. A method for ameliorating oxygen-based treatments of cellulosic materials in aqueous systems comprising adding to an aqueous system containing cellulosic materials an effective oxygen-based treatment stabilizing amount of a combination of:

   a) citric acid and

   b) a second compound selected from the group consisting of sodium gluconate, sodium glucoheptonate, ethylenediaminetetraacetic acid, tris(hydroxymethyl) aminomethane, and a combination of N-alkyl dimethyl benzyl ammonium chloride and N-dialkyl methyl benzyl ammonium chloride.

12. The method of Claim 11 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

13. The method Claim 12 wherein the aqueous system is a pulp and paper system.

14. The method of Claim 12 wherein the mole ratio of citric acid to the second compound is from 0.001:99.999 to 99.999:0.001.

15. A method for ameliorating oxygen-based treatments of cellulosic materials in aqueous systems comprising adding to an aqueous system containing cellulosic materials an effective oxygen-based treatment stabilizing amount of a combination of:

   a) sodium gluconate and

b) a second compound selected from the group consisting of sodium glucoheptonate, ethylenediaminetetraacetic acid, tris(hydroxymethyl)aminomethane, and a combination of N-alkyl dimethyl benzyl ammonium chloride and N-dialkyl methyl benzyl ammonium chloride.

16. The method of Claim 15 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

17. The method of Claim 16 wherein the aqueous system is a pulp and paper system.

18. The method of Claim 16 wherein the mole ratio of sodium gluconate to the second compound is from 0.001: 99.999 to 99.999: 0.001.

19. A method for ameliorating oxygen-based treatments of cellulosic materials in aqueous systems comprising adding to an aqueous system containing cellulosic materials an effective oxygen-based treatment stabilizing amount of a combination of:

a) ethylenediaminetetraacetic acid, and

b) tris(hydroxymethyl)aminomethane, and a combination of N-alkyl dimethyl benzyl ammonium chloride and N-dialkyl methyl ammonium chloride.

20. The method of Claim 19 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

21. The method of Claim 20 wherein the aqueous system is a pulp and paper system.

22. The method of Claim 20 wherein the mole ratio of ethylenediaminetetraacetic acid to the second compound is from 0.001: 99.999 to 99.999:0.001.

23. A method for stabilizing peroxide treatments in aqueous paper production streams containing kraft pulp, peroxide, manganese and iron comprising the step of adding to the aqueous paper production stream containing kraft pulp, peroxide, manganese and iron, wherein an equal or greater amount of iron is present than manganese, an effective peroxide-stabilizing amount of a combination selected from the group consisting of: poly(acrylamide/sodium acrylate/N-(trishydroxymethyl)methyl acrylamide)/diethylenetriaminepentaacetic acid, poly(acrylamide/sodium acrylate/N-(trishydroxymethyl)methyl acrylamide)/citric acid, poly(acrylamide/sodium acrylate/N-(trishydroxymethyl)methyl acrylamide)/and a combination of N-alkyl dimethyl benzyl ammonium chloride and N-dialkyl methyl benzyl ammonium chloride, poly(acrylamide/sodium acrylate/N-(trishydroxymethyl)methyl acrylamide)/ethylenediaminetetraacetic acid, diethylenetriaminepentaacetic acid/and a combination of N-alkyl dimethyl benzyl ammonium chloride and N-dialkyl methyl benzyl ammonium chloride, diethylenetriaminepentaacetic acid/ethylene diaminetetraacetic acid, citric acid/and a combination of N-alkyl dimethyl benzyl ammonium chloride and N-dialkyl methyl benzyl ammonium chloride, citric acid/sodium glucoheptonate, citric acid/ ethylenediaminetetraacetic acid, sodium gluconate/sodium glucoheptonate, sodium gluconate/ethylenediaminetetraacetic acid and a combination of N-alkyl dimethyl benzyl ammonium chloride and N-dialkyl methyl benzyl ammonium chloride/sodium glucoheptonate.

24. A method for stabilizing peroxide treatments in aqueous paper production streams containing peroxide, kraft pulp, manganese and iron comprising the step of adding to the aqueous paper production stream containing peroxide, kraft pulp, manganese and iron, wherein an equal or lower amount of iron is present than manganese, an effective peroxide-stabilizing amount of a combination selected from the group consisting of : poly(acrylamide/sodium acrylate/N-(trishydroxymethyl)methyl acrylamide)/diethylenetriaminepentaacetic acid, poly(acrylamide/sodium acrylate/N-(trishydroxymethyl)methyl acrylamide)/and a combination of N-alkyl dimethyl benzyl ammonium chloride and N-dialkyl methyl benzyl ammonium chloride, poly(aspartic acid)/citric acid, poly(aspartic acid)/sodium glucoheptonate, poly(aspartic acid)/ethylenediaminetetraacetic acid, diethylenetriaminepentaacetic acid/citric acid and diethylenetriaminepentaacetic acid /sodium gluconate.

25. A method for stabilizing peroxide treatments in aqueous paper production streams containing peroxide, mechanical pulp, manganese and iron comprising the step of adding to the aqueous paper production streams containing per-

EP 0 831 169 A2

oxide, mechanical pulp, manganese and iron, wherein an equal or greater amount of iron is present than manganese, an effective peroxide-stabilizing amount of a combination selected from the group consisting of: poly(acrylamide/sodium acrylate/N-(trishydroxymethyl)methyl acrylamide)/sodium gluconate, poly(acrylamide/sodium acrylate/N-(trishydroxymethyl)methyl acrylamide)/sodium glucoheptonate, diethylenetriaminepentaacetic acid/sodium gluconate, diethylenetriaminepentaacetic acid/and a combination of N-alkyl dimethyl benzyl ammonium chloride and N-dialkyl methyl benzyl ammonium chloride, diethylenetriaminepentaacetic acid/sodium glucoheptonate, citric acid/and a combination of N-alkyl dimethyl benzyl ammonium chloride and N-dialkyl methyl benzyl ammonium chloride, citric acid/sodium glucoheptonate, sodium gluconate/sodium glucoheptonate, sodium gluconate/ethylenediaminetetraacetic acid, and a combination of N-alkyl dimethyl benzyl ammonium chloride and N-dialkyl methyl benzyl ammonium chloride/ethylenediaminetetraacetic acid.

26. A method for stabilizing peroxide treatments in aqueous paper production streams containing peroxide, mechanical pulp, manganese and iron comprising the step of adding to the aqueous paper production stream containing peroxide, mechanical pulp, manganese and iron, wherein an equal or lower amount of iron is present than manganese, an effective peroxide-stabilizing amount of a combination selected from the group consisting of: poly(acrylamide/sodium acrylate/N-(trishydroxymethyl)methyl acrylamide)/sodium gluconate, poly(acrylamide/sodium acrylate/N-(trishydroxymethyl)methyl acrylamide)/and a combination of N-alkyl dimethyl benzyl ammonium chloride and N-dialkyl methyl benzyl ammonium chloride, poly(acrylamide/sodium acrylate/N-(trishydroxymethyl)methyl acrylamide)/ ethylenediaminetetraacetic acid, poly(aspartic acid)/ ethylenediaminetetraacetic acid, diethylenetriaminepentaacetic acid/citric acid, diethylenetriaminepentaacetic acid/sodium gluconate, diethylenetriaminepentaacetic acid/and a combination of N-alkyl dimethyl benzyl ammonium chloride and N-dialkyl methyl benzyl ammonium chloride, diethylenetriaminepentaacetic acid/sodium glucoheptonate, citric acid/ethylenediaminetetraacetic acid and sodium gluconate/and a combination of N-alkyl dimethyl benzyl ammonium chloride and N-dialkyl methyl benzyl ammonium chloride.

27. A method for ameliorating oxygen-based treatments of cellulosic materials in aqueous systems comprising adding to an aqueous system containing cellulosic materials an effective oxygen-based treatment stabilizing amount of a water-soluble polymer selected from the group consisting of poly(aspartic acid), poly(dithiocarbamate), poly(acrylamide/sodium acrylate/N-(trishydroxymethyl)methyl acrylamide), poly(acrylamide/sodium acrylate/sodium acrylamido(3,4-dihydroxyphenyl) methane sulfonate), poly(sodium acrylate/sodium acrylamido(2-hydroxyphenyl) methane sulfonate), poly(sodium acrylate/N-(trishydroxymethyl)methyl acrylamide), poly(sodium acrylate/sodium acrylamido(3,4-dihydroxyphenyl) methane sulfonate) and poly(acrylamide/sodium acrylate/sodium acrylamido(2-hydroxyphenyl) methane sulfonate).

28. The method of Claim 27 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

29. The method of Claim 28 wherein from about 0.001 to about 2 percent by weight of water-soluble polymer is added based on the dry weight of the cellulosic material.

30. The method of Claim 28 wherein the aqueous system is a pulp and paper system.

31. The method of Claim 28 wherein the water-soluble polymer is poly(acrylamide/sodium acrylate/N-(trishydroxymethyl)methyl acrylamide), and the mole ratio of acrylamide to sodium acrylate to N-(trishydroxymethyl)methyl acrylamide is from 0:1:99 to 10:60:30 and the molecular weight is from 1,000 to 10,000,000.

32. The method of Claim 28 wherein the water-soluble polymer is poly(acrylamide/sodium acrylate/sodium acrylamido(2-hydroxyphenyl) methane sulfonate) and the mole ratio of acrylamide to sodium acrylate to sodium acrylamido(2-hydroxyphenyl) methane sulfonate is from 0:10:90 to 10:60:30 and the molecular weight is from 1,000 to 10,000,000.

33. The method of Claim 28 wherein the water-soluble polymer is poly(acrylamide/sodium acrylate/sodium acrylamido(3,4-dihydroxyphenyl) methane sulfonate) and the mole ratio of acrylamide to sodium acrylate to sodium acrylamido(3,4-dihydroxyphenyl) methane sulfonate is from 0:10:90 to 10:60:30 and the molecular weight is from 1,000 to 10,000,000.

34. A method for ameliorating oxygen-based treatments of cellulosic materials in aqueous systems comprising adding to an aqueous system containing cellulosic materials an effective oxygen-based treatment stabilizing amount of:

a) a compound selected from the group consisting of diethylenetriaminepentaacetic acid, citric acid, sodium gluconate, sodium glucoheptonate, ethylenediaminetetraacetic acid, tris(hydroxymethyl)aminomethane, and a combination of N-alkyl dimethyl benzyl ammonium chloride and N-dialkyl methyl benzyl ammonium chloride and

b) a water-soluble polymer selected from the group consisting of poly(aspartic acid), poly(dithiocarbamate), poly(acrylamide/sodium acrylate/N-(trishydroxymethyl)methyl acrylamide), poly(acrylamide/sodium acrylate/sodium acrylamido(3,4-dihydroxyphenyl) methane sulfonate), poly(sodium acrylate/sodium acrylamido(2-hydroxyphenyl) methane sulfonate), poly(sodium acrylate/sodium acrylamido(3,4-dihydroxyphenyl) methane sulfonate), poly(sodium acrylate/N-(trishydroxymethyl)methyl acrylamide) and poly(acrylamide/sodium acrylate/sodium acrylamido(2-hydroxyphenyl) methane sulfonate).

35. The method of Claim 34 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.

36. The method of Claim 35 wherein the aqueous system is a pulp and paper system.

37. The method of Claim 35 wherein the mole ratio of the compound to the water-soluble polymer is from about 0.00001: 99.99999 to about 99.99999: 0.00001.

38. The method of Claim 35 wherein wherein the water-soluble polymer is poly(acrylamide/sodium acrylate/N-(trishydroxymethyl)methyl acrylamide) and the mole ratio of acrylamide to sodium acrylate to N-(trishydroxymethyl)methyl acrylamide is from 0:1:99 to 10:60:30 and the molecular weight is from 1,000 to 10,000,000.

39. The method of Claim 35 wherein the water-soluble polymer is poly(acrylamide/sodium acrylate/sodium acrylamido(3,4-dihydroxyphenyl) methane sulfonate) and the mole ratio of acrylamide to sodium acrylate to sodium acrylamido(3,4-dihydroxyphenyl) methane sulfonate is from 0:1:99 to 10:30:60 and the molecular weight is from 1,000 to 10,000,000.

40. The method of Claim 35 wherein the water-soluble polymer is poly(acrylamide/sodium acrylate/sodium acrylamido(2-hydroxyphenyl) methane sulfonate) and the mole ratio of acrylamide to sodium acrylate to sodium acrylamido(2-hydroxyphenyl) methane sulfonate is from 0:1:99 to 10:30:60 and the molecular weight is from 1,000 to 10,000,000.

41. A water-soluble polymer of the formula poly(acrylamide/sodium acrylate/sodium acrylamido(3,4-dihydroxyphenyl) methane sulfonate).

42. The polymer of Claim 41 wherein the mole ratio of acrylamide to sodium acrylate to sodium acrylamido(3,4-dihydroxyphenyl) methane sulfonate) is from 0:1:99 to 10:30:60 and the molecular weight is from 1,000 to 10,000,000.

43. A water-soluble polymer of the formula poly(acrylamide/sodium acrylate/sodium acrylamido(2-hydroxyphenyl) methane sulfonate).

44. The polymer of Claim 43 wherein the mole ratio of acrylamide to sodium acrylate to sodium acrylamido(2-hydroxyphenyl) methane sulfonate is from 0:1:99 to 10:30:60 and the molecular weight is from 1,000 to 10,000,000.

45. A water-soluble polymer of the formula poly(sodium acrylate/sodium acrylamido(2-hydroxyphenyl) methane sulfonate).

46. The polymer of Claim 45 wherein the mole ratio of sodium acrylate to sodium acrylamido(2-hydroxyphenyl) methane sulfonate is from 99:1 to 60:40 and the molecular weight is from 1,000 to 10,000,000.

47. A water-soluble polymer of the formula poly(sodium acrylate/N-(trishydroxymethyl)methyl acrylamide).

48. The polymer of Claim 47 wherein the mole ratio of sodium acrylate to N-(trishydroxymethyl)methyl acrylamide is from 99:1 to 60:40 and the molecular weight is from 1,000 to 10,000,000.

**49.** A water-soluble polymer of the formula poly(sodium acrylate/sodium acrylamido(3,4-dihydroxyphenyl) methane sulfonate).

**50.** The polymer of Claim 49 wherein the mole ratio of sodium acrylate to sodium acrylamido(3,4-dihydroxyphenyl) methane sulfonate is from 99:1 to 60:40 and the molecular weight is from 1,000 to 10,000,000.

**51.** A method for ameliorating oxygen-based treatments of cellulosic materials in aqueous systems comprising adding to an aqueous system containing cellulosic materials an effective oxygen-based treatment stabilizing amount of a combination of sodium glucoheptonate and xylanase enzyme.

**52.** The method of Claim 51 wherein the oxygen-based treatment is selected from the group consisting of oxygen delignification, oxygen-aided extraction, peroxide-aided extraction, peroxide/oxygen-aided extraction, peroxide bleaching and pressurized peroxide bleaching.